# EUROPEAN PATENT APPLICATION

(11) **EP 4 823 092 A1**
(43) Date of publication of application: **14.10.2026**
(21) Application number: 25305510.7
(22) Date of filing: 08.04.2025
(51) Int. Cl.: H04N 19/117, H04N 19/176, H04N 19/50, H04N 19/82, H04N 19/86

(54) **FIXED-FILTERS WITH ADAPTIVE LOOP FILTER FOR DEBLOCKING FILTERING**

(71) Applicant: InterDigital CE Patent Holdings, SAS, 75017 Paris (FR)
(72) Inventor: MARZUKI, Ismail, MONTREAL, H3J 1V4 (CA); BOISSON, Guillaume, 35137 PLEUMELEUC (FR); PURI, Saurabh, SAINT-LAZARE, J7T 0P6 (CA); LEFEBVRE, Frederic, 35000 RENNES (FR)
(74) Representative: Vossius & Partner Patentanwälte Rechtsanwälte mbB

(57) **Abstract**

Systems, methods, and instrumentalities associated with fixed-filters with adaptive loop filter for deblocking filtering. The device may include a processor configured to obtain a plurality of reconstructed samples. The device may obtain a plurality of fixed adaptive loop filtered reconstructed samples by applying a fixed adaptive loop filter (ALF) on the plurality of reconstructed samples. The device may apply a deblock filter (DBF) on the plurality of fixed adaptive loop filtered reconstructed samples to obtain a plurality of deblock filtered reconstructed samples. The device may obtain a reconstructed picture based on the plurality of deblock filtered reconstructed samples.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities associated with fixed-filters with adaptive loop filter for deblocking filtering. The device may include a processor configured to obtain a plurality of reconstructed samples. The device may obtain a plurality of fixed adaptive loop filtered reconstructed samples by applying a fixed adaptive loop filter (ALF) on the plurality of reconstructed samples. For example, the device may determine a plurality of classification indices associated with the fixed ALF based on the plurality of reconstructed samples. The device may apply a deblock filter (DBF) on the plurality of fixed adaptive loop filtered reconstructed samples to obtain a plurality of deblock filtered reconstructed samples. The fixed ALF may be applied on the plurality of reconstructed samples based on the plurality of determined classification indices prior to applying the DBF. The device may be or may include a video decoding device, and may obtain a reconstructed picture based on the plurality of deblock filtered reconstructed samples. The device may be or may include a video encoding device and may encode a picture based on the plurality of deblock filtered reconstructed samples.

In examples, the device may obtain a plurality of predicted samples and a corresponding plurality of reconstructed samples. The fixed ALF may be applied to the reconstructed samples based on the plurality of predicted samples. In examples, the device may determine, based on the plurality of reconstructed samples and plurality of predicted samples, a plurality of classification indices associated with the fixed ALF. The fixed ALF may be applied on the plurality of reconstructed samples based on the plurality of determined classification indices prior to applying the DBF.

In examples, the device may obtain a gaussian fixed filter. The gaussian fixed filter may be applied to at least one of the plurality of reconstructed samples or plurality of predicted samples to obtain the plurality of fixed adaptive loop filtered reconstructed samples prior to applying the DBF.

In examples, the device may apply a first ALF to the reconstructed samples prior to deblock filtering. The device may apply a second fixed ALF on the plurality of deblock filtered reconstructed samples to obtain a plurality of deblock filtered fixed ALF filtered reconstructed samples. The device may apply at least one of a boundary strength filter, a sample adaptive offset filter, or a cross-component sample adaptive offset filter on the plurality of deblock filtered fixed ALF filtered reconstructed samples.

In examples, the device may perform clipping as part of the applying of the fixed ALF. In examples, the device may perform a first clipping as part of the applying of the first fixed ALF. The device may perform a second clipping as part of the application of the second fixed ALF. In examples, the device may bypass clipping when applying of the first fixed ALF and may bypass clipping when the application of the second fixed ALF. The device may apply a third ALF on the plurality of reconstructed samples and perform clipping as part of the applying of the third ALF.

In examples, a video decoding device may obtain a fixed ALF extended usage indication configured to indicate whether to extend fixed ALF filtering beyond an ALF process. The fixed ALF may be applied on the reconstructed samples based on the fixed ALF extended usage indication indicating to extend fixed ALF filtering separately from an ALF process. Application of a fixed ALF separate from an ALF process may be bypassed based on the on the fixed ALF extended usage indication indicating to not extend fixed ALF filtering separately from an ALF process.

In examples, a video encoding device may determine to extend fixed ALF filtering beyond an ALF process. The video encoding device may include, in video data, a fixed ALF extended usage indication configured to indicate to extend fixed ALF filtering separately from an ALF process. In examples, a video encoding device may determine to not extend fixed ALF filtering beyond an ALF process. The video encoding device may include, in video data, a fixed ALF extended usage indication configured to indicate to not extend fixed ALF filtering separately from an ALF process.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates horizontal and vertical block boundaries on an 8x8 grid.
FIG. 5 illustrates an example overview of a deblocking decision workflow.
FIG. 6 illustrates an example sample position of p_{i,k} and q_{i,k} of horizontal and vertical block boundaries.
FIG. 7 illustrates example vertical and horizontal block boundaries.
FIG. 8 illustrates an example four-sample long vertical boundary segment formed by blocks P and Q.
FIG. 9 illustrates example deblocking for luma if samples at either side of a boundary belong to a large block.
FIG. 10 illustrates an example luma adaptive loop filter (ALF) 7x7 diamond-shape filter and an example chroma ALF 5x5 diamond-shape filter.
FIGS. 11 illustrates an example luma ALF signaled filter shape.
FIG. 12 illustrates an example overview of prediction samples and pre-deblock filter (DBF) reconstructed samples as input of extended usage of fixed filters ALF for DBF input.
FIG. 13 illustrates an example overview of pre-DBF reconstructed samples as input of extended usage of fixed filters ALF for DBF input.
FIG. 14 illustrates an example overview of prediction samples as input of extended usage of fixed filters ALF for DBF input.
FIG. 15 illustrates an example overview of extended usage of fixed filters ALF for DBF input and output.
FIG. 16 illustrates an example overview of extended usage of fixed filters ALF for DBF input and output.
FIG. 17 illustrates an example overview of extended usage of fixed filters ALF for DBF input and output.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

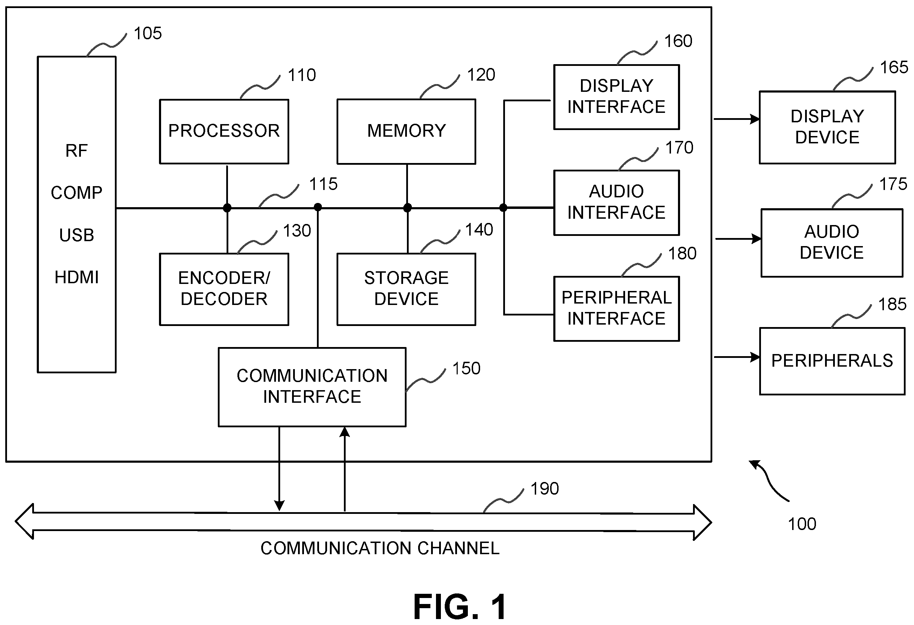

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

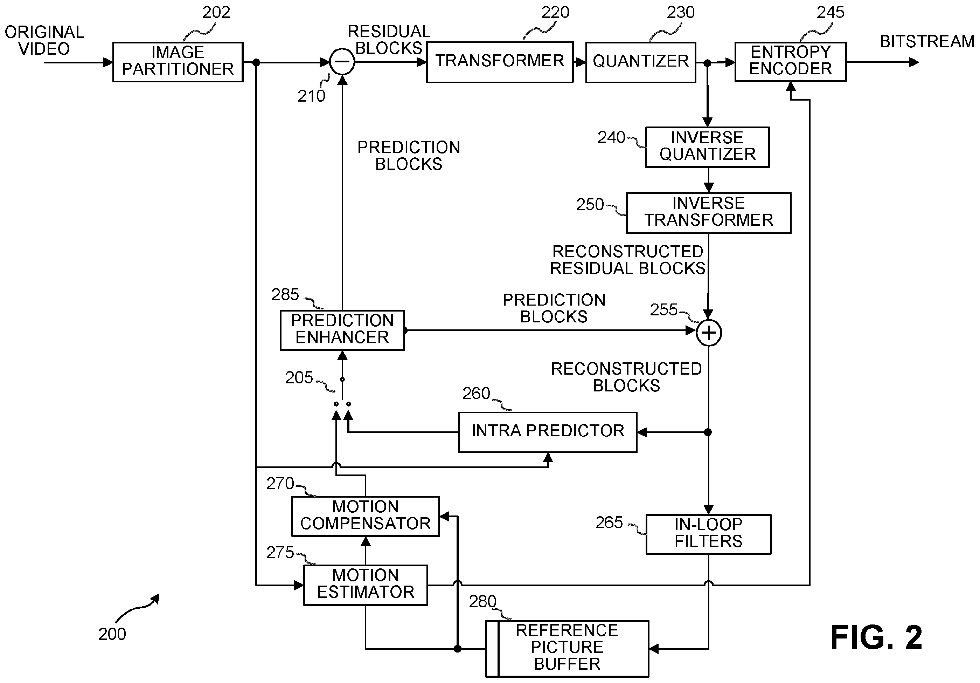

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

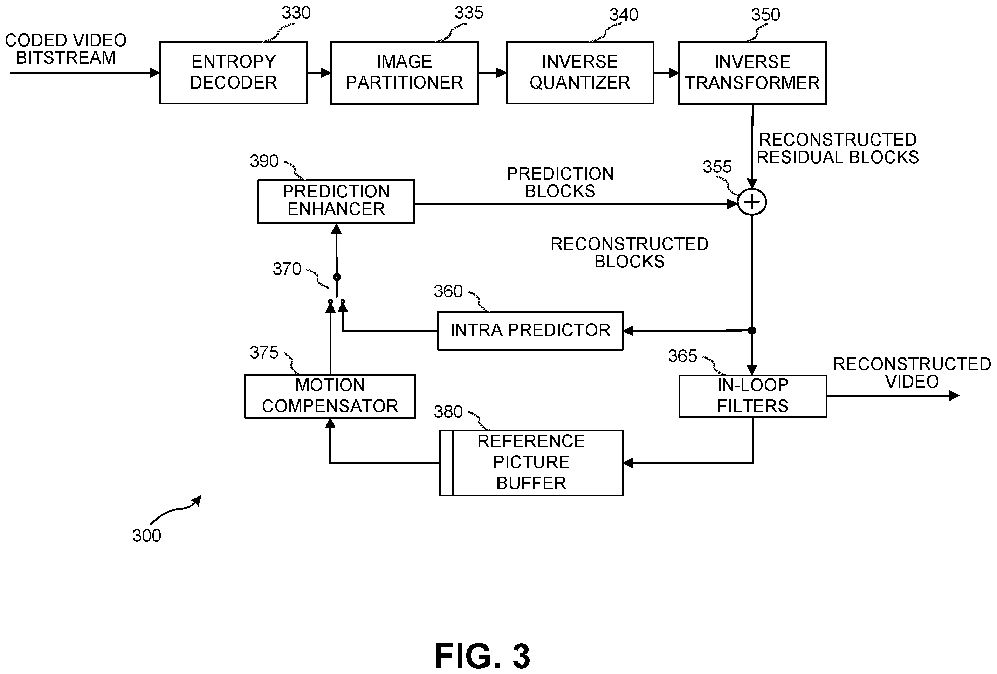

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

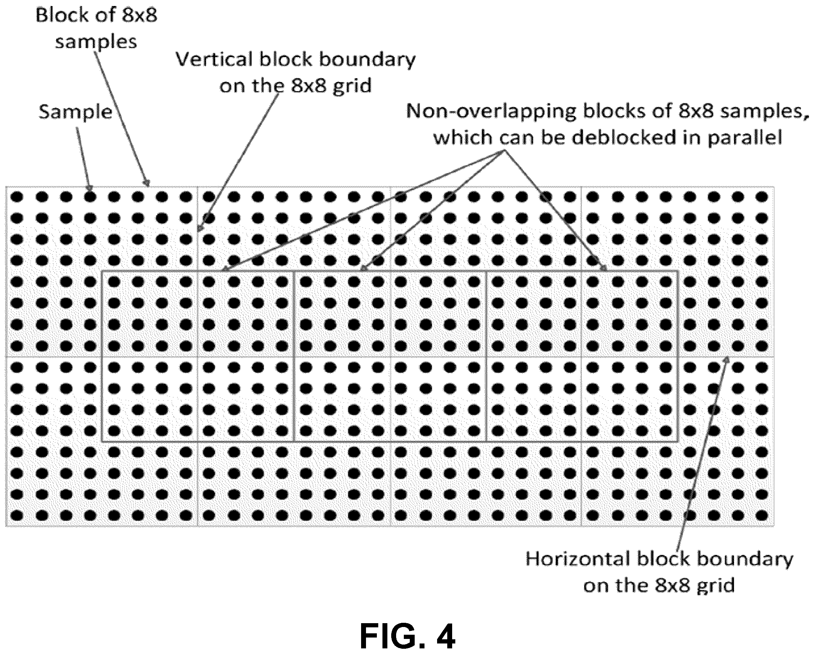

Features described herein may be associated with deblocking filters (DBF). Filtering decisions may be made separately for a (e.g., each) boundary of four-sample length that lies on the grid dividing the picture into blocks of 8x8 samples (see FIG. 4). Boundaries which are either Prediction Unit (PU) or Transform Unit (TU) boundaries may be subject to deblocking. Deblocking may be performed on a four-sample part of a block boundary if (e.g., all of) the following criteria are met: the block boundary may be a PU or TU boundary; the boundary strength Bs may be greater than zero; or variation of signal on both sides of the boundary may be below a specified threshold.

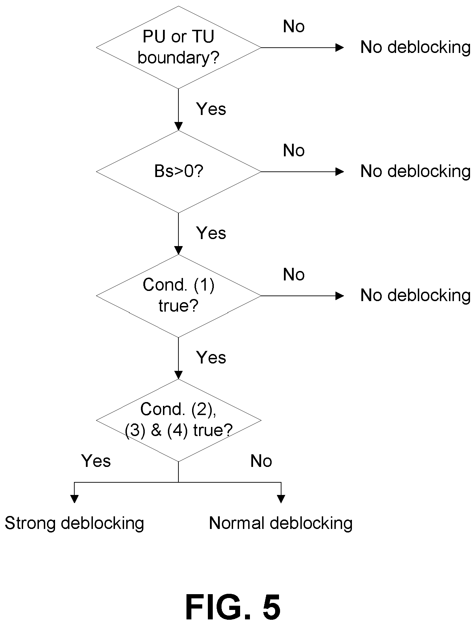

FIG. 4 shows example horizontal and vertical block boundaries on an 8x8 grid. If certain additional conditions hold, a filter (e.g., strong filter) may be applied (e.g., instead of the normal deblocking filter). FIG. 5 shows an example of an overview of HEVC deblocking decision workflow. The decision workflow is depicted in FIG. 5.

A deblocking filter process may be applied on CU boundaries, transform subblock boundaries, and prediction subblock boundaries. Larger blocks may be allowed, and the DBF may be extended to address the values remaining in large smooth areas. The processing order of the deblocking filter may be defined as horizontal filtering for vertical edges for the entire picture first, followed by vertical filtering for horizontal edges. This specific order may enable either multiple horizontal filtering or vertical filtering processes to be applied in parallel threads or may be implemented on a CTB-by-CTB basis with only a small processing latency. Modifications may be made to the DBF. The modifications may include the filter strength of the deblocking filter may be dependent of the averaged luma level of the reconstructed samples. The modifications may include deblocking tC table extension and adaptation to 10-bit video. The modifications may include 4x4 grid deblocking for luma. The modifications may include stronger deblocking filter for luma. The modifications may include stronger deblocking filter for chroma. The modifications may include deblocking filter for subblock boundary. The modifications may include deblocking decision adapted to smaller difference in motion.

In DBF, if boundary strength is greater than zero, additional conditions may be checked for luma and/or chroma to determine whether the deblocking filtering should be applied to the block boundary with a stronger or a weaker filtering. The filter strength of the deblocking filter may be controlled by the variables β and tC which may be derived from the averaged quantization parameters (qPL) of the two adjacent coding blocks. Maximum QP may be changed from 51 to 63 to reflect a corresponding change to deblocking tC table, which may derive values of deblocking parameters tC based on the block QP. The tC table may also be adapted to 10-bit video instead of 8-bit video to accommodate the extension of the QP range and 10-bit video. The deblocking filter process in Luma may adaptively adjust the filtering strength of deblocking filter by adding offset to qPL (e.g., qpOffset) according to the averaged luma level of the reconstructed samples. This refinement may be used to compensate the nonlinear transfer function such as Electro-Optical Transfer Function (EOTF) in the linear light domain. The mapping function of qpOffset and the luma level may be signaled in the SPS and may be derived according to the transfer characteristics of the contents since the transfer functions vary among video formats.

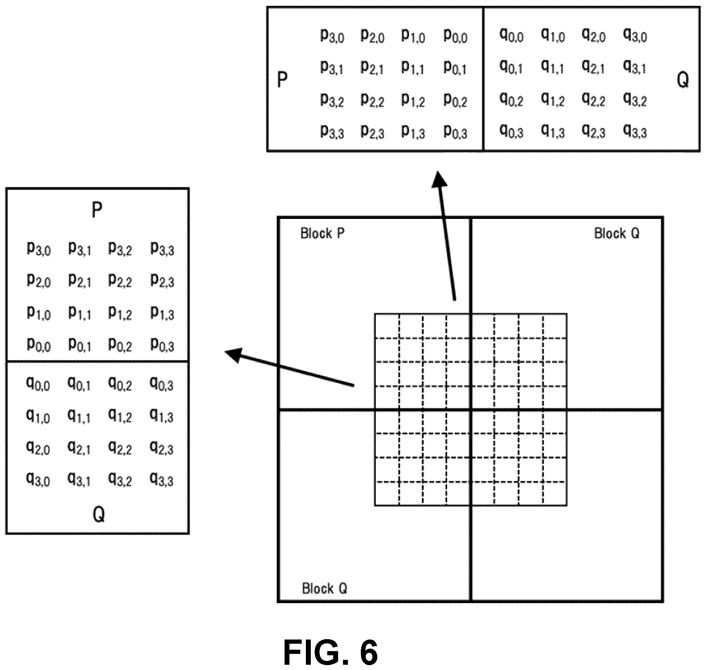

FIG. 6 shows a sample position of p_{i,k} and q_{i,k} in the case of horizontal and vertical block boundaries. Features described herein may be associated with a luma deblocking filter. An 8x8 deblocking grid may be used for both luma and chroma. FIG. 6 shows an illustration of four-pixel long horizontal and vertical boundaries on the 8x8 grid.

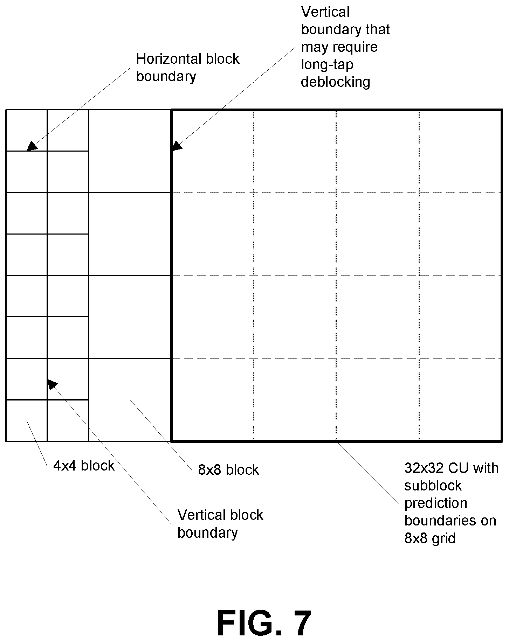

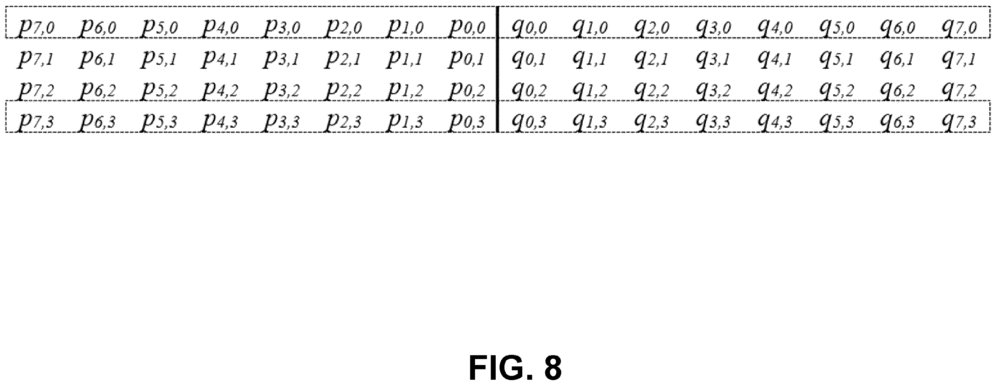

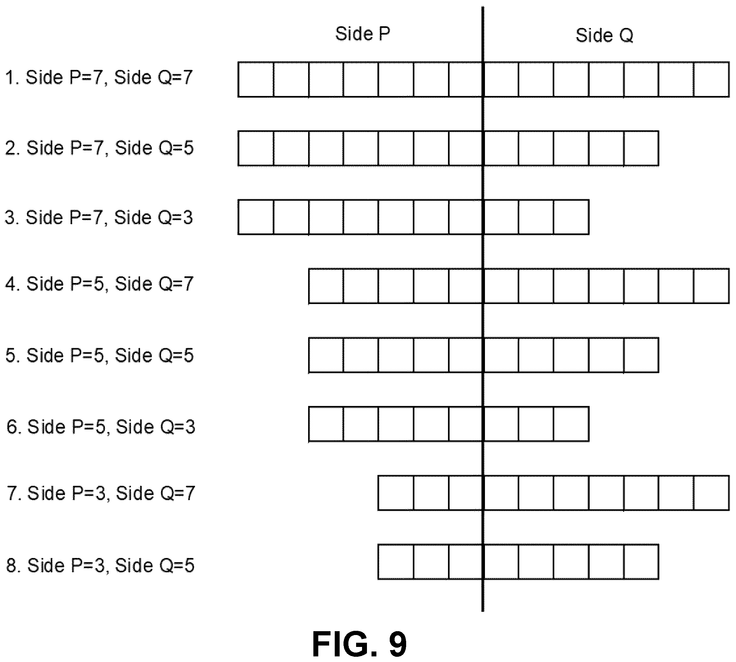

FIG. 7 shows vertical and horizontal block boundaries on the 4x4 grid, 32x32 CU with PUs on 8x8 grid, and vertical boundary that may require long-tap deblocking. FIG. 8 an example four-sample long vertical boundary segment formed by blocks P and Q. Deblocking decisions may be based on lines #0 and #3. FIG. 9 shows example deblocking for luma when samples at either one side of a boundary belong to a large block (e.g., width ≥ 32 and height ≥ 32).

Due to flexible block sizes in VVC, the luma deblocking may be applied on a 4x4 sample grid for boundaries between CUs and TUs, and on an 8x8 grid for boundaries between PUs inside CUs, as shown in FIG. 7, to handle blocking artifacts from rectangular transform shapes. FIG. 8 shows the improvement of sample position of P and Q in a block. Parallel friendly luma deblocking filter process on a 4x4 grid may be achieved by restricting the number of samples to be deblocked to 1 sample on each side of a vertical luma boundary where one side has a width of 4 or less or to 1 sample on each side of a horizontal luma boundary where one side has a height of 4 or less.

Before deriving boundary strength bS and performing filtering decisions based on spatial activity, a deblocking filter may decide whether to use long-tap filters and determine appropriate filter lengths. This may be carried out to ensure that non spatial dependency exists with the adjacent vertical or horizontal block boundaries. After determining the deblocking filter lengths, the boundary strength bS may be derived. bS derivation may be modified to accommodate a coding tool(s), such as block-level differential pulse code modulation (BDPCM), combined intra-inter prediction (CIIP), intra block copy (IBC), high motion vector accuracy, etc.

Decisions based on spatial activity may be made for the cases of non-zero bS. If the deblocking filter sample belongs to a large block, that is defined as when the width is larger than or equal to 32 for a vertical edge, and when height is larger than or equal to 32 for a horizontal edge, the spatial activity decision for the long-tap deblocking filter or stronger filter may apply. Otherwise, the decision process for short-tap deblocking filter or weak filter may apply, as shown in FIG. 9. Thresholds may depend on the QP. The short-tap deblocking filters may be similar to deblocking filters, the only difference including the introduction of position-dependent clipping to control the differences between filtered values and the sample values before filtering. The long-tap deblocking filter may be designed to preserve inclined surfaces and linear signals across the block boundaries.

Features described herein may be associated with chroma deblocking filter. The Chroma deblocking may be performed on an 8x8 sample grid on boundaries of both CUs and TUs. Compared to luma, deblocking lengths are limited to 3+3, 1+3 or 1+1. Minor bS adaptations may be introduced to account for a coding mode(s), such as BDPCM and CIIP. The chroma strong filters may be used on both sides of the block boundary. The chroma filter may be selected when both sides of the chroma edge are greater than or equal to 8 (in unit of chroma sample). and the following decision with three conditions are satisfied. One is for decision of boundary strength as well as large block. A second and third condition are similar for a luma decision, which are on/off decision and strong filter decision, respectively. If one of these three conditions is satisfied, the remaining conditions with lower priorities may be skipped.

Features described herein may be associated with boundary strength (bS) and edge-level adaptability. The bS can take one of the following three possible values: 0, 1, and 2. The definition of bS in VVC is shown in Table 1.

**Table 1: Definition of bS values for the boundary between two neighboring blocks**

| Priority | Conditions | bS | | |
|---|---|---|---|---|
| | | Y | U | V |
| 6 | At least one of the adjacent blocks is coded with intra or CIIP mode | 2 | 2 | 2 |
| 5 | At least one of the adjacent blocks has non-zero transform coefficients | 1 | 1 | 1 |
| 4 | One of the adjacent blocks is coded in IBC prediction mode and the other is coded in inter prediction mode | 1 | 1 | 1 |
| 3 | Absolute difference between the motion vectors that belong to the adjacent blocks is greater than or equal to one half luma sample | 1 | 0 | 0 |
| 2 | Reference pictures the two adjacent blocks refers to are different | 1 | 0 | 0 |
| 1 | Otherwise | 0 | 0 | 0 |

For Luma, only block boundaries with bS values equal to 1 or 2 are filtered. For Chroma, deblocking is performing when bS is equal to 2, or bS is equal to 1 when a large block boundary is detected. With the current development of ECM, another rule on bS for IntraGPM has been added, where at least one of the adjacent blocks is coded with non-inter prediction mode or intraGPM, then bS for Luma and both chroma components is set to 2.

Features described herein may be associated with an adaptive loop filter (ALF). An ALF filter may be an adaptive filter and may be applied to reduce the difference (e.g., an MSE) between original and reconstructed samples. The ALF filter may, for example, use a Wiener-filter encoding approach.

The coefficients of an ALF filter may be transmitted in a bitstream and may be decoded at a decoder side, before being applied on reconstructed samples. An ALF filter may be pre-trained, in which case, the coefficients of the ALF filter may be hardcoded in an encoder and/or a decoder.

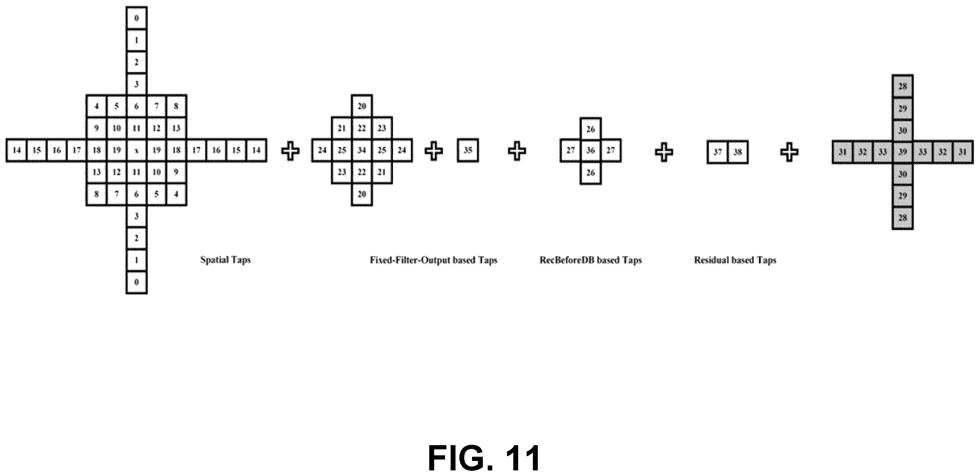

An ALF filter may be point-symmetrical or DC-neutral (e.g., with integer coefficients). An ALF filter may apply 7x7 diamond-shaped filtering for Luma. An ALF filter may apply 5x5 diamond-shaped filtering for Chroma. FIG. 11 illustrates an example of adaptive loop filtering with respect to a luma component and a chroma component.

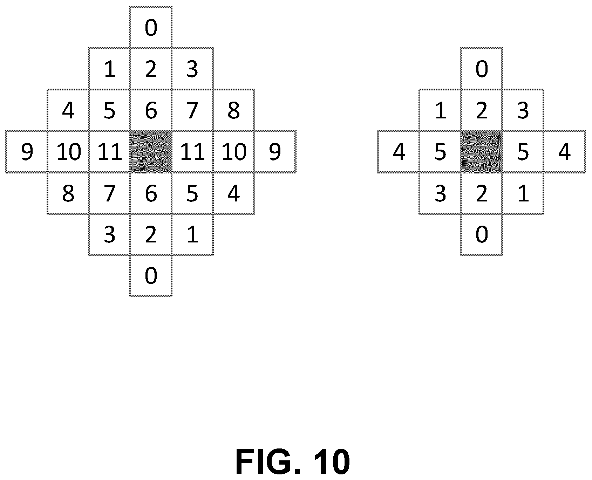

FIG. 10 shows an example luma ALF 7x7 diamond-shape filter (left) and Chroma ALF 5x5 diamond-shape filter (right). ALF filters may be point-symmetrical, DC-neutral with integer coefficients. ALF may use 7x7 diamond-shaped filters for luma and 5x5 diamond-shaped filters for chroma, as depicted in FIG. 10.

Features described herein may be associated with filtering operations.

Let R(x,y) be a reconstructed sample and let R (x,y) denote its ALF-filtered value. In the linear implementation of ALF, R (̅x,y) is computed as: $\overline{R} \left(x, y\right) = R \left(x, y\right) + \left[{\sum }_{i = 0}^{N - 2} {c}_{i} \times \left(Δ{R}_{i}^{+}+Δ{R}_{i}^{-}\right)\right]$ (1)

Where (*cᵢ*)_{0≤*i*<*N*-1} denote the filter coefficients,
And: $\begin{matrix}Δ {R}_{i}^{+} = R \left(x+{x}_{i},y+{y}_{i}\right) - R \left(x, y\right) \\ Δ {R}_{i}^{-} = R \left(x-{x}_{i},y-{y}_{i}\right) - R \left(x, y\right)\end{matrix}$ (2)

With (±*xᵢ*, ±*yᵢ*) denoting the coordinates offset corresponding to the reconstructed samples associated with the i-th coefficient *cᵢ*

In the non-linear implementation of ALF, Equation (1) becomes: $\overline{R} \left(x, y\right) = R \left(x, y\right) + \left[{\sum }_{i = 0}^{N - 2} {c}_{i} \times \left({f}_{i}^{+}+{f}_{i}^{-}\right)\right]$ (3) With: $\begin{matrix}{f}_{i}^{+} = min \left({b}_{i},max\left(-{b}_{i},R\left(x+{x}_{i},y+{y}_{i}\right)-R\left(x, y\right)\right)\right) \\ {f}_{i}^{-} = min \left({b}_{i},max\left(-{b}_{i},R\left(x-{x}_{i},y-{y}_{i}\right)-R\left(x, y\right)\right)\right)\end{matrix}$ (4)

Where *bᵢ* is the clipping parameter associated with the coefficient *cᵢ*, that is determined by a clipping index *dᵢ*. The clipping parameter *bᵢ* is derived as follows: ${b}_{i} = \left\{\begin{matrix}{2}^{BD} & when {d}_{i} = 0 \\ {2}^{BD - 1 - 2 {d}_{i}} & otherwise\end{matrix}\right.$ (5)

Where BD denotes the sample bit depth, and *dᵢ* can be 0, 1, 2 or 3.

Features described herein may be associated with integer arithmetic.

NUM_BITS may denote the number of bits used to represent ALF filter coefficients *dᵢ* as signed integers. ALF filtering operations may be implemented as follows: $\overline{R} \left(x, y\right) = R \left(x, y\right) + \left[\left(\left[{\sum }_{i = 0}^{N - 2} {c}_{i} \times \left({f}_{i}^{+}+{f}_{i}^{-}\right)\right]+offset\right)≫shift\right]$ (6) Where $shift = NUM_BITS - 1$ (7) And $offset = 1 ≫ \left(shift-1\right)$ (8)

ALF filter coefficients and/or clipping indices may be determined at an encoder side, for instance, by solving Wiener-Hopf equations to minimize an MSE between reconstructed samples and their original values. If a rate-distortion condition is met, these coefficients and, if applicable, the corresponding clipping indices, may be encoded in bitstream (e.g., in an adaptation parameter set (APS)). For example, an ALF APS may include one luma filter set and up to 8 chroma filter sets.

An ALF filter (e.g., an ALF luma filter) may be pre-trained (e.g., pre-defined), in which coefficients of the filter may be hardcoded at an encoder and/or a decoder.

ALF for the luma component of a video block may be adapted (e.g., locally) according to classification that may be performed based on local gradients. For example, the ALF for luma may use filter sets, which may include a plurality of filters arranged together with a mapping list. Each class of the classification may be associated with a specific filter of the filter set. Depending on the classification, geometric filter transformations may be applied, such as a 90-degree rotation, or a diagonal or vertical flip, so that the same filter coefficients may be used for different classes or gradient directions.

A number of pre-trained luma filter sets may be available at an encoder and/or a decoder. The encoder may choose, according to a rate-distortion criterion, whether to transmit a luma filter set that may have been optimized for a current slice or frame.

At a coding tree unit (CTU) level, the encoder may decide if ALF is performed, and may select the luma filter set that may be used between the pre-trained filter sets and the filter sets that may have already been transmitted (e.g., in a bitstream).

ALF for a chroma component of a video block may or may not implement local classification. For example, ALF for chroma may use one or more region-adapted filters rather than a classification based filter. In examples, up to 8 ALF chroma filters may be available simultaneously at the encoder and/or decoder sides, and a (e.g., each) chroma coding tree block (CTB) may signal which filter it uses.

Intermediate filtering may be performed for a video block (e.g., for the luma component of the video block). Such filtering may be applied to reconstructed samples with one or more pre-trained filters (e.g., having fixed coefficients). These filters may be referred to herein as "fixed filters" and may be used before online-trained adaptive filters (e.g., which may be referred to herein as "signaled filters").

An encoder and/or a decoder may use multiple (e.g., three) fixed filters in the intermediate filtering stage. A subset (e.g., two) of these filters may be classification-based, and may be denoted as *f*₀ and *f*₁. When using such classification-based fixed filters, two Laplacian-based classifiers (e.g., one for each classification-based fixed filter) may be applied to a 2x2 block. In each classifier, activity and directionality values may be derived based on vertical, horizontal, and diagonal gradients using a window surrounding each 2x2 block. For each 2x2 block, the mean value of a surrounding window may be calculated and, for each sample of this window, the difference between the sample value and the mean value may be calculated. A scaling factor may be determined based on an activity value derived from a Laplacian classifier. The square root of the sum of the squared differences may be quantized to *C'* by the scaling factor. The value of *C'* may be an integer between 0 and 7, inclusively. Let *Cᵢ* denote the class index provided by an 896-class Laplacian classifier of the i-th fixed filter, based on the activity and directionality values. The final class index ${C}_{i}^{′}$ may be derived as: ${C}_{i}^{′} = C ′ \times 896 + {C}_{i}$ (Eq.21)

Two double diamond-shaped fixed filters may be selected from the two fixed filter sets using the derived class indices ${C}_{0}^{′}$ and ${C}_{1}^{′}$. The first fixed filter *f*₀ may be applied to sample values before DBF and ALF input, with an 13x13 diamond applying on the ALF input and an additional 9x9 diamond applying to sample values before DBF. The second fixed filter *f*₁ may be applied to the output of *f*₀ and to the sample values before DBF, for example, using a 9x9 diamond on each.

In examples, another fixed filter (e.g., a third luma fixed filter with a diamond shape of 7x7) may be used, without classification. This fixed filter may be a Gaussian fixed filter and may be denoted as *f*₂.

Subsequent to the fixed filtering described above, a signaled filter (e.g., a luma filter whose coefficients may be signaled in and thus obtained from a bitstream) may be applied to ALF input samples, samples before DBF, outputs of classifications-based fixed filters (e.g., *f*₀ and *f*₁ described herein), output of a non-classification-based fixed filter (e.g., *f*₂ described herein), and/or residual samples.

The value of a final filter sample (e.g., a luma filtered sample) may computed as follows: $\begin{matrix}{R}^{˜} \left(x, y\right) = R \left(x, y\right) + \left[{\sum }_{i = 0}^{19} {c}_{i} \left({f}_{i}^{+}+{f}_{i}^{-}\right)\right] + \left[{\sum }_{i = 20}^{25} {c}_{i} \left({g}_{0 , i}^{+}+{g}_{0 , i}^{-}\right)\right] \\ + \left[{\sum }_{i = 26}^{27} {c}_{i} \left({h}_{i}^{+}+{h}_{i}^{-}\right)\right] + \left[{\sum }_{i = 28}^{33} {c}_{i} \left({g}_{2 , i}^{+}+{g}_{2 , i}^{-}\right)\right] \\ + \left[{\sum }_{i = 34}^{34} {c}_{i} {g}_{0 , 1}\right] + \left[{\sum }_{i = 35}^{35} {c}_{i} {g}_{1 , i}\right] + \left[{\sum }_{i = 36}^{36} {c}_{i} {h}_{i}\right] + \left[{\sum }_{i = 37}^{37} {c}_{i} {r}_{i}\right] \\ + \left[{\sum }_{i = 38}^{38} {c}_{i} {rFiltered}_{i}\right] + \left[{\sum }_{i = 39}^{39} {c}_{i} {g}_{2 , i}\right]\end{matrix}$ (Eq.22) where *fᵢ*^{±} may represent the clipped difference between a neighboring sample and the current sample *R*(*x,y*), ${g}_{0 , i}^{\pm }$ may represent the clipped difference between an intermediate sample generated from a first fixed filter (e.g., *f*₀) and the current sample *R*(*x,y*)*,* and ${g}_{2 , i}^{\pm }$ may represent the clipped difference between an intermediate sample generated from a third fixed filter (e.g., *f*₂ described herein) and the current sample *R*(*x*,*y*). *g*_{0,34} may represent the clipped difference between the collocated intermediate sample generated from the first fixed filter *f*₀ and the current sample *R*(*x,y*), *g*_{1,35} may represent the clipped difference between the collocated intermediate sample generated from a second fixed filter (e.g., *f*₁ descrbied herein) and the current sample *R*(*x*,*y*), and *g*_{2,39} may represent the clipped difference between the collocated intermediate sample generated from the third fixed filter and the current sample *R*(*x,y*)*.* ${h}_{i}^{\pm }$ may represent the clipped difference between a neighboring sample before DBF and the current sample *R*(*x,y*)*,* and *h*₃₆ may represent the clipped difference between the collocated sample before DBF and the current sample *R*(*x*,*y*). *r*₃₇ may represent the clipped neighboring residual sample value and *rFiltered*₃₈ may represent the clipped residual sample filtered by a fixed filter. For the residual samples, the fixed filter used may be a fixed filter from the first fixed filter set.

FIG. 11 shows an example luma ALF signaled filter shape. FIG. 11 provides the workflow in ALF with *f*₀, *f*₁, *f*₂ as input of signaled filter. The complete filter shape of ALF may use residual samples as additional inputs as shown in FIG. 11.

Features described herein may be associated with a deblocking filter (DBF) in the in-loop filtering. Reconstructed samples may be used as an input that may have discontinuities at the block boundaries due to the block-based transform coding of the prediction error followed by the coarse quantization step. DBF may improve subjective and objective quality by smoothing the discontinuities block boundary of two neighboring blocks depending on a filtering strength determined based on some previous coding information. To improve the quality of reconstructed samples after DBF and improve coding performance, the usage of fixed filters of the adaptive loop filter (ALF) may be extended by taking the reconstructed samples before DBF and after DBF as input to generate a filtered output for bilateral filter (BF), sample of offset (SAO), and cross-component SAO (CCSAO). The fixed filters ALF may use classification and/or offline-trained coefficients dedicated for ALF, for example, for the output of ALF and/or for the input source of online filter of ALF, to reduce the coding noise at the ALF stage.

Usage of fixed filters ALF for the reconstructed samples may be extended before DBF. DBF may take the reconstructed samples after the block-based transform coding and the coarse quantization step. Having a better quality of an intermediate reconstructed samples before being fed to DBF may contribute to a higher performance.

Usage of fixed filters ALF for the reconstructed samples may be extended after DBF. Higher quality reconstructed samples before DBF and after DBF may be used as the inputs for further use in BF/SAO/CCSAO.

DBF performance may be improved by using fixed filters ALF (e.g., a set) applied prior to DBF and/or after DBF to reduce coding noise of the reconstructed signals and/or to improve coding performance and/or subjective quality of the reconstructed signals. The usage of fixed filters ALF may be extended to be applied before DBF by aiming to improve reconstructed samples from the transform and quantization stage. The usage of fixed filters ALF may be extended to be applied after DBF by aiming to improve reconstructed samples for BF/SAO/CCSAO.

Features described herein may be associated with extended usage of fixed filters ALF for DBF input, for example, different input samples to the extended usage of fixed filters ALF. Features described herein may be associated with extended usage of fixed filters ALF for DBF input and output, for example, different input samples to the extended usage of fixed filters ALF. Accordingly, there will be two implementation scenarios of the extended usage of fixed filters ALF, such as applied before DBF and after DBF. Features described herein may be associated with extended usage of fixed filters ALF for BF/SAO, for example, applying the extended usage of fixed filters ALF for the output of BF and SAO stages. Features described herein may be associated with clipping after the extend usage of fixed filters ALF, for example, applying the clipping operation for the ideas. Features described herein may be associated with slice level signaling to indicate whether extended fixed ALF is to be applied (e.g., separately from an ALF process).

An intermediary filter may be added between DBF and/or BF/SAO/CCSAO by taking the fixed filters of ALF to exploit the reconstruction samples before and after DBF as input to generate the filtered results at this stage for coding efficiency improvements, which may be used as the input of the BF/SAO/CCSAO. The following embodiments may further improve coding efficiency by extending the usage of the fixed filters of ALF/CCALF.

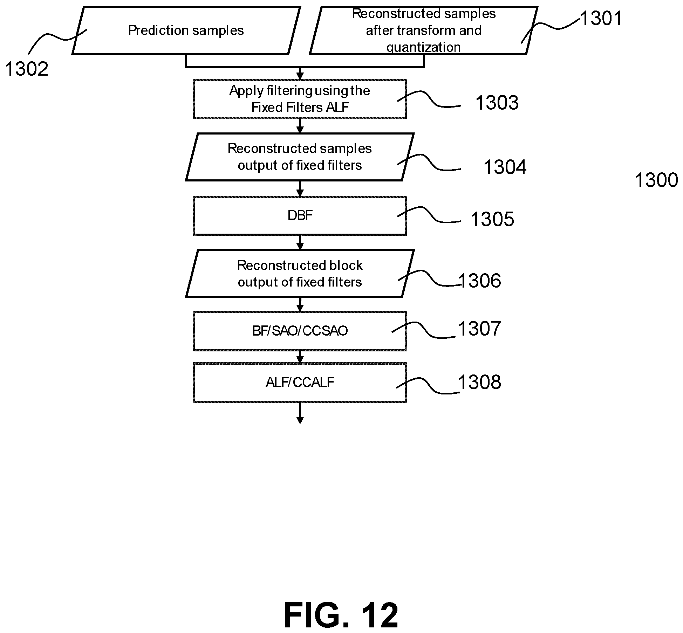

Features described herein may be associated with extended usage of fixed filters ALF for DBF input. FIG. 12. Prediction samples and pre-DBF reconstructed samples as input of extended usage of fixed filters ALF for DBF input. A plurality of predicted samples may be obtained by applying a fixed adaptive loop filter (ALF) on the plurality of predicted samples. A plurality of reconstructed samples may be obtained based on the plurality of fixed adaptive loop filtered predicted samples (e.g., and a residue). The usage of fixed filters ALF may be extended before DBF. A deblock filter (DBF) may be applied on the plurality of reconstructed samples to obtain a plurality of deblock filtered reconstructed samples. Noise may be removed from the reconstructed samples caused by transform and quantization stages. A reconstructed picture may be obtained based on the plurality of deblock filtered reconstructed samples/encoding a picture based on the plurality of deblock filtered reconstructed samples. The reconstructed samples may be taken after transform and quantization (e.g., pre-DBF reconstructed samples stages (1301)) and the prediction samples (1302) as input of the fixed filters ALF (1303) to generate the filtered results at this stage (1304), as depicted in FIG. 12. The fixed ALF may be a first fixed ALF. The filtered reconstructed samples may be fed to DBF (1305). The output of DBF (1306) may be processed for BF/SAO/CCSAO (1307). The output may be processed by ALF/CCALF stages (1308). A second fixed ALF may be applied on the plurality of deblock filtered reconstructed samples to obtain a plurality of deblock filtered fixed ALF filtered reconstructed samples. At least one of a boundary strength filter, a sample adaptive offset filter, or a cross-component sample adaptive offset filter may be applied on the plurality of deblock filtered fixed ALF filtered reconstructed samples. The classification and filtering logic of the fixed filters ALF may be reused as in ALF. The filtered reconstructed samples may be used as input for DBF.

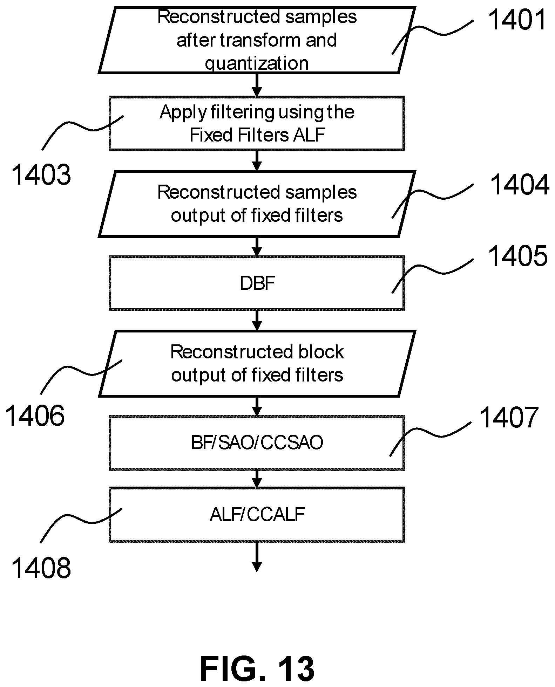

FIG. 13 shows example pre-DBF reconstructed samples as input of extended usage of fixed filters ALF for DBF input. In examples, the usage of fixed filters ALF may take a single input, for example the pre-DBF reconstructed samples (1401), apply the fixed filters ALF to the reconstructed samples pre-DBF (1403) to generate the filtered results at this stage (1404) and use it as input for DBF (1405). Then, the output of DBF (1406) is further processed for BF/SAO/CCSAO (1407) followed by ALF/CCALF stages (1408), as shown in FIG. 13. Note that the fixed filter coefficients may be summed by spatially pair(s) at consistent positions between two fixed filters. The results may be used to filter the pre-DBF reconstructed samples. The classification and filtering logic of the fixed filters ALF may be reused as in ALF. The filtered reconstructed samples may be used as input for DBF.

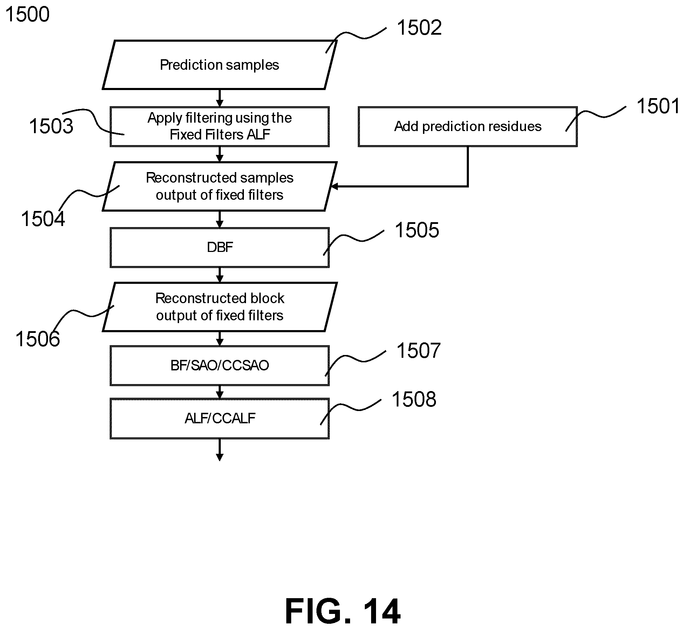

FIG. 14 shows example prediction samples as input of extended usage of fixed filters ALF for DBF input. In examples, the usage of fixed filters ALF may take a single input, such as the prediction samples (1502), apply the fixed filters ALF to the reconstructed samples pre-DBF (1503) to generate the filtered predicted samples. Then, prediction residues are added to filtered predicted samples (1501), and their sum, which is the filtered reconstructed samples pre-DBF (1504), is then used as input for DBF (1505). Then, the output of DBF (1506) is further processed for BF/SAO/CCSAO (1507) followed by ALF/CCALF stages (1508), as shown in FIG. 14. Note that the fixed filter coefficients may be summed by spatially pair(s) at consistent positions between two fixed filters. The results may be used to filter the prediction samples. The classification and filtering logic of the fixed filters ALF may be reused as in ALF.

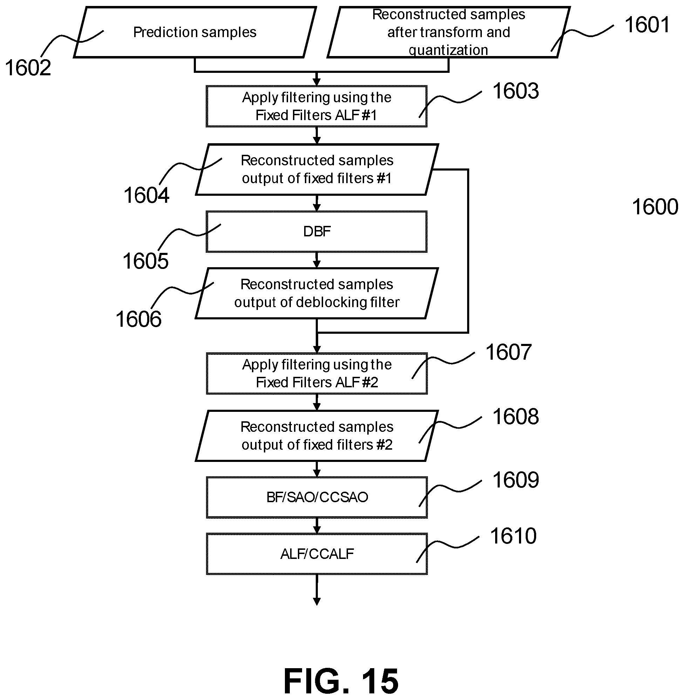

Features described herein may be associated with extended usage of fixed filters ALF for DBF input and output. FIG. 15 shows an example overview of extended usage of fixed filters ALF for DBF input and output. The extended usage of fixed filters ALF may be used for DBF output, as shown in FIG. 15. The prediction samples (1602) and the pre-DBF reconstructed samples (1601) may be inputs to the fixed filters ALF (1603) to generate the filtered results (1604). The output filtered by the fixed filters ALF together with the output of the DBF may be used as inputs filtered by the fixed filters ALF (1607). The generated samples by the second stage fixed filters ALF (1608) may be used as input(s) of BF/SAO/CCSAO (1609) and/or by ALF/CCALF (1610). The classification and filtering logic of the fixed filters ALF may be reused as in ALF.

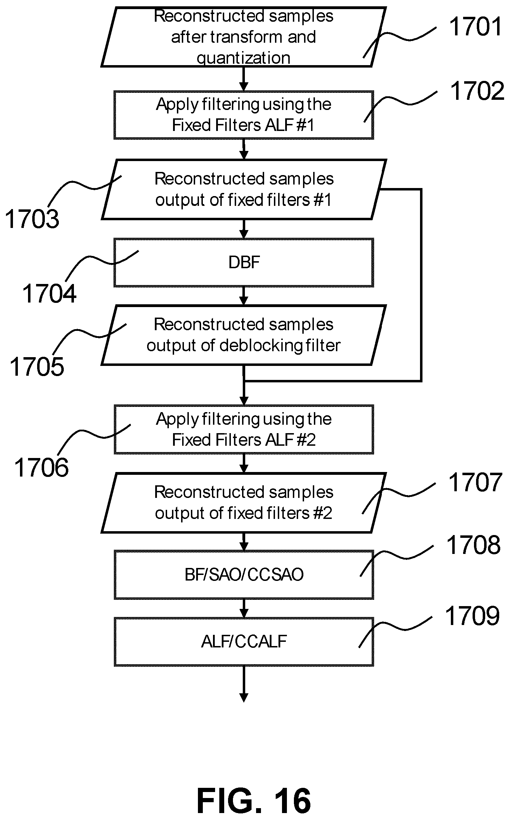

FIG. 16 shows an example overview of extended usage of fixed filters ALF for DBF input and output. The usage of fixed filters ALF (1702) may take a single input, such as the pre-DBF reconstructed samples (1701), as shown in FIG. 16, to generate the filtered results at this stage (1703), as in embodiment-1 alternative-1.1. Then, the output of the first stage filtered by the fixed filters ALF together with the output of the DBF (1705) are used as input of the second stage filtered by the fixed filters ALF (1706). The generated frames by the second stage fixed filters ALF (1707) may be used as input of BF/SAO/CCSAO (1708) followed by ALF/CCALF (1709). The classification and filtering logic of the fixed filters ALF are directly reused as in ALF.

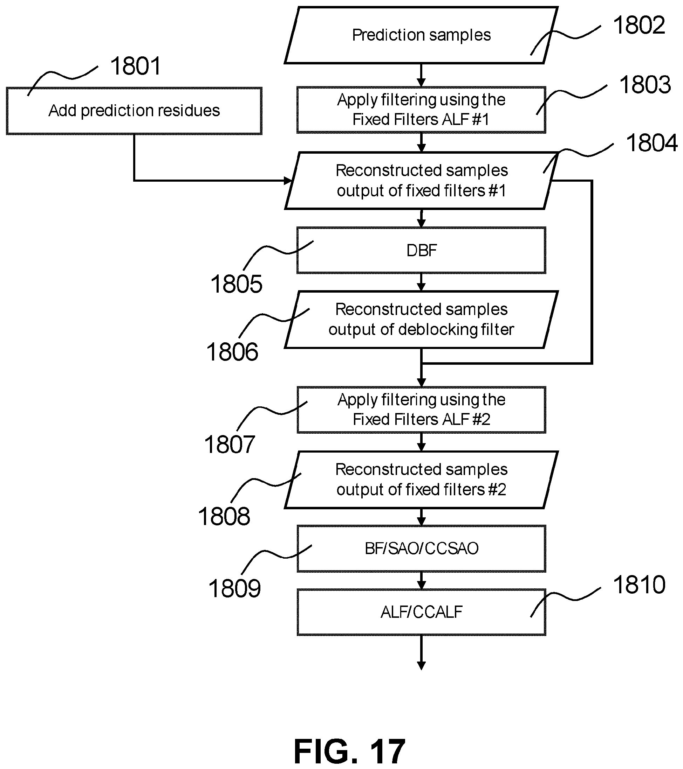

FIG. 17 shows an example overview of extended usage of fixed filters ALF for DBF input and output. The usage of fixed filters ALF (1803) may take a single input, such as the prediction samples (1802), to generate the filtered predicted samples, as shown in FIG. 17. Prediction residues may be added to filtered predicted samples (1801), and their sum, which may be the filtered reconstructed samples pre-DBF (1804), may be used as input for DBF (1805). The sum of prediction residues with filtered prediction, which may be the reconstructed samples pre-DBF, may be used as an input of the second stage filtered by the fixed filters ALF (1807), with the output of DBF (1806). The generated samples by the second stage fixed filters ALF (1808) may be used as input of BF/SAO/CCSAO (1809) followed by ALF/CCALF (1810). The classification and filtering logic of the fixed filters ALF may be reused as in ALF.

Features described herein may be associated with extended usage of fixed filters ALF for BF/SAO. BF and SAO may be applied before the extended usage of fixed filters ALF. The extended usage of fixed filters ALF may be further used by taking the reconstructed samples after DBF and the reconstruction samples after BF and SAO as inputs of the fixed filters ALF at this stage. The generated filtering output may be fed to ALF process, such as for classification and offline-trained coefficients to reduce the coding noise at the ALF stage, and also for the input source of online filter of ALF. The classification and filtering logic of the fixed filters ALF may be directly reused as in ALF.

Features described herein may be associated with clipping after the extend usage of fixed filters ALF. The clipping bounds may depend on the internal bit depth used in the coding and decoding processes. Depending on the video content characteristics, these default clipping bounds may be different from the actual minimum and maximum sample values of the pictures. For example, for 10-bit coding, the clipping is between 0 and 1023. A clipping operation that may be used in the various steps of the coding/decoding process is the following: ${T}_{clip} = {Clip}_{BD} \left(T, bitdepth\right) = Clip 3 \left(0,\left(1≪bitdepth\right)-1,T\right)$ where *T_{clip}* is the resulting clipped value, the function *Clip*3(*min, max, T*) clips the value *T* between the bounds *min* and *max,* and *bitdepth* corresponds to the internal bit depth used for the current component type.

Clipping may occur after applying each fixed filter. The clipping operation may be applied for each filtering by using the fixed filters ALF to ensure that extreme values resulting from the fixed filtering stage are put in the correct range or precision depending on the internal bit depth used in the coding and decoding process.

Clipping may occur at the last stage (e.g., only) of filtering, such as for ALF output. A clipping operation may be applied (e.g., only) at the last stage of in-loop filtering, such as after the ALF process. It may offer simplicity and less operations than applying clipping operation after each step of filtering to ensure that extreme values resulting from the fixed filtering stage are put in the correct range or precision depending on the internal bit depth used in the coding and decoding process.

Features described herein may be associated with adaptive clipping. An adaptive clipping operation may be used to replace the common clipping operation as explained above. An adaptive clipping function may be operated by the following component-wise adaptive clipping as: ${T}_{clip} = {Clip}_{BD} \left(T, bitdepth, C\right) = Clip 3 \left({min}_{C}, {max}_{C}, T\right)$ where C is the component ID (typically Y, Cb or Cr), *min_{c}* is the lower clipping bound used in current slice for component ID *C*, and *max_{c}* is the upper clipping bound used in current slice for component ID *C*. The clipping bounds may change from slice to slice as they are determined at the encoder side. The minimum and maximum clipping bounds may be discovered based on the minimum and maximum sample values of the current input picture. The clipping bounds may be coded in a way in the bit-stream to minimize the bitrate overhead. This adaptive clipping operation may be used after executing fixed filters ALF. An adaptive clipping operation may be applied at the last stage of the in-loop filtering, such as after the ALF process. In every step of the fixed filtering ALF applicable, where a clipping is performed between 0 and ((1 << *bitdepth*) - 1), the adaptive clipping process may be used.

Features described herein may be associated with slice level signaling. A (e.g., one) slice level flag may be signaled to achieve on and/or off control. If the flag is on, the extended usage of fixed filters ALF may be enabled. Otherwise, a normal in-loop filter procedure(s) may be applied.

One or more embodiments provide a computer program comprising instructions which when executed by one or more processors cause such processors to perform the encoding and/or decoding methods according to any of the embodiments described above. One or more embodiments also provide a computer-readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding method, comprising:
obtaining a plurality of reconstructed samples;
obtaining a plurality of fixed adaptive loop filtered reconstructed samples by applying a fixed adaptive loop filter (ALF) on the plurality of reconstructed samples;
applying a deblock filter (DBF) on the plurality of fixed adaptive loop filtered reconstructed samples to obtain a plurality of deblock filtered reconstructed samples; and
obtaining a reconstructed picture based on the plurality of deblock filtered reconstructed samples.

2. A video encoding method, comprising:
obtaining a plurality of reconstructed samples;
obtaining a plurality of fixed adaptive loop filtered reconstructed samples by applying a fixed adaptive loop filter (ALF) on the plurality of reconstructed samples;
applying a deblock filter (DBF) on the plurality of fixed adaptive loop filtered reconstructed samples to obtain a plurality of deblock filtered reconstructed samples; and
encoding a picture based on the plurality of deblock filtered reconstructed samples.

3. The method of any of claims 1 or 2, further comprising:
obtaining a plurality of predicted samples, wherein the fixed adaptive loop filter (ALF) is applied to the plurality of reconstructed samples based on the plurality of predicted samples.

4. The method of any of claims 1-3, further comprising:
determining a plurality of classification indices associated with the fixed ALF based on the plurality of reconstructed samples, wherein the fixed ALF is applied on the plurality of reconstructed samples based on the plurality of determined classification indices prior to applying the DBF.

5. The method of claim 3, further comprising:
determining, based on the plurality of reconstructed samples and plurality of predicted samples, a plurality of classification indices associated with the fixed ALF, wherein the fixed ALF is applied on the plurality of reconstructed samples based on the plurality of determined classification indices prior to applying the DBF.

6. The method of any of claims 1-3, further comprising:
obtaining a gaussian fixed filter, wherein the gaussian fixed filter is applied to at least one of the plurality of reconstructed samples or plurality of predicted samples to obtain the plurality of fixed adaptive loop filtered reconstructed samples prior to applying the DBF.

7. The method of any of claims 1-6, wherein the fixed ALF is a first fixed ALF, and the method further comprises:
applying a second fixed ALF on the plurality of deblock filtered reconstructed samples to obtain a plurality of deblock filtered fixed ALF filtered reconstructed samples; and
applying at least one of a boundary strength filter, a sample adaptive offset filter, or a cross-component sample adaptive offset filter on the plurality of deblock filtered fixed ALF filtered reconstructed samples.

8. The method of any of claims 1-6, further comprising:
perform clipping as part of the applying of the fixed ALF.

9. The method of any of claims 1-7, further comprising:
perform a first clipping as part of the applying of the first fixed ALF; and
perform a second clipping as part of the applying of the second fixed ALF.

10. The method of any of claims 1-7, further comprising:
bypass clipping when applying of the first fixed ALF;
bypass clipping when the applying of the second fixed ALF; and
applying a third ALF on the plurality of reconstructed samples, wherein clipping is performed as part of the applying of the third ALF.

11. The method of any of claims 1 and 3-10, further comprising:
obtaining a fixed ALF extended usage indication configured to indicate whether to extend fixed ALF filtering beyond an ALF process, wherein the fixed ALF is applied on the plurality of reconstructed samples based on the fixed ALF extended usage indication indicates to extend fixed ALF filtering separately from an ALF process.

12. The method of any of claims 2-10, further comprising:
determine to extend fixed ALF filtering beyond an ALF process; and
include, in video data, a fixed ALF extended usage indication configured to indicate to extend fixed ALF filtering separately from an ALF process.

13. The method of any of claims 1-12, wherein the fixed ALF comprises a pre-configured filter.

14. A video decoding device comprising a processor configured to perform the steps of a method according to at least one of claims 1 and 3-11.

15. A video encoding device comprising a processor configured to perform the steps of a method according to at least one of claims 2-11.
